# EUROPEAN PATENT SPECIFICATION

(11) **EP 3 834 110 B1**
(45) Date of publication and mention of the grant of the patent: **29.05.2024**
(21) Application number: 19744955.6
(22) Date of filing: 28.06.2019
(51) Int. Cl.: G06F 21/41, H04L 9/40, H04L 67/143

(54) **GLOBAL SIGN-OUT ON SHARED DEVICES**
GLOBALE ABMELDUNG AUF GEMEINSAM GENUTZTEN GERÄTEN
FERMETURE DE SESSION GLOBALE SUR DES DISPOSITIFS PARTAGÉS

(30) Priority: 10.08.2018 US 201816100233
(43) Date of publication of application: 16.06.2021
(73) Proprietor: Microsoft Technology Licensing, LLC, Redmond, WA 98052-6399 (US)
(72) Inventor: GORDON, Ariel, Redmond, Washington 98052-6399 (US); WERNER, Brandon, Redmond, Washington 98052-6399 (US)
(74) Representative: CMS Cameron McKenna Nabarro Olswang LLP
(86) International application number: PCT/US2019/039669
(87) International publication number: WO 2020/033075

(56) References cited:
- US-A1- 2015 365 399
- US-A1- 2015 381 633
- US-A1- 2017 171 321

## Description

### BACKGROUND

Mobile devices running operating systems such as but not limited to the iOS or Android mobile device operating systems are designed for single users. The application software developed for mobile devices has also been optimized for single users. Because authentication is typically not an experience that a user enjoys, software developers try to make the user authenticate to a mobile device only once. That is, a single sign-on signs a user on to multiple applications. Effort is expended to keep a user signed in to his device.

Sometimes a user wants to remove his account from a certain mobile application while maintaining his account on others. For example, a user may want to remove a personal email account from his mobile device so that emails are not synchronized, thereby using up space, while keeping his account signed in to a file storage account (so that, for example, his pictures continue to be automatically backed up). In this scenario, the account may be hidden from the email application, but session artifacts may be maintained on the device for other mobile applications to use. This is frequently done because removing accounts from the device where storage is shared (e.g. across mobile applications) may lead to usability issues. For example, when tokens are shared in a common storage area on the mobile device, removing or adding accounts in one application can have deleterious consequences for other applications that also use those tokens. For example, if the email application removed all the tokens from the device and fully signed out the user, the file storage application may stop synchronizing files. Moreover, it is likely that a user would be mystified as to why signing out of his email application would impact his file storage application.

US 2015/0365399 A1 describes a computer implemented method and apparatus for sharing server resources.

US 2017/0171321 A1 describes methods and devices for managing accounts. A method may include receiving, by a processor, a first log-out request for logging out a plurality of target accounts corresponding to at least one target application.

US 2015/0381633 A1 describes techniques relating to automating permission requests, e.g., in the context of multi-factor authentication.

### SUMMARY

The invention is set out in the appended set of claims.

Heuristics can be used to determine if an alternate behavior is desired on a particular mobile device. The alternate behavior can be the appearance of a sign-out mechanism. For example, instead of a "sign out" link appearing, an "end of shift" link can be displayed. Heuristics can be used to determine if a particular mobile device is a shared device. If the device is a shared device, this information can be made discoverable to mobile applications (e.g. by including a "shared device" flag in authentication tokens). When a mobile application finds the shared device flag indicating the device is shared, the "sign-out" link for the mobile application can be replaced with an "end of shift" link. In response to a user clicking on the link, a global sign out can sign the user out of all the applications into which the user is signed in. Global sign out behavior can include deleting session artifacts from shared state. Refresh tokens can be revoked to ensure that a user is signed out of third party mobile applications.

A session revocation manager can invalidate all of the user's refresh tokens issued to mobile applications. A session revocation manager can invalidate all of the user's refresh tokens issued to mobile applications by setting a date and time until which a refresh token is valid to the current date and time. Session cookies in a user's browser can be invalidated. These operations may be performed by a user or an administrator (e.g., for example, this feature may be helpful if the user has a lost or stolen device or forgets to sign out). This operation can prevent access to any of the organization's data accessed through applications on the device because a user can be required to sign in again before he is allowed access to the application. The user can be forced to sign in again for all applications previously in use, irrespective of the mobile device being used to access the application.

Determination that the device is a shared device can be based on the identity of the user who is signing in. Identity of the user can be based on group membership (e.g. the user is a member of "retail employees" group), or license assignment. Alternatively, in cases where the user stays signed in (e.g., when a user uses his own rather than an organization's device), a combination of user identity and device identity can be used to determine if the device is shared. Determination that the device is a shared device can be based on a network to which the device is connected. Determination that the device is a shared device can be based on a location of the device.

"End of shift" behavior can be performed in an intermediary API (application programming interface) or in some or all applications that rely on an authentication service. If an intermediary API is installed and the user selects the end my shift behavior in another mobile application, the mobile application can invoke the intermediary API. The intermediary API can clean up state. In addition, an "End my shift" API can be called from inside line of business applications by end users. The end my shift behavior can be invoked programmatically by an external shift management system. Users can be automatically signed out based on end-of-shift information. Users can be automatically signed out based on the time of the end of the shift or a configurable amount of time after the shift is scheduled to end. An administrator, manager or the IT (Information Technology) department of an organization can sign out a user. An option in the administrator's portal can be provided that can be used to sign a user out of a shared device by invalidating sessions on the device.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

In the drawings:
FIG. 1 is a block diagram 100 representing an example of a system for global sign-out on shared devices in accordance with aspects of the subject matter disclosed herein;
FIG. 2A illustrates an example of a method 200 for global sign-out on shared devices in accordance with aspects of the subject matter described herein;
FIG. 2B illustrates an of a method 220 comprising a more detailed example of a portion of method 200 for global sign-out on shared devices in accordance with aspects of the subject matter described herein; and
FIG. 3 is a block diagram of an example of a computing environment in accordance with aspects of the subject matter described herein.

### DETAILED DESCRIPTION

### Overview

Many enterprise-level users are trying to use mobile devices in "kiosk" mode, meaning that the devices are part of a pool of devices shared by a number of employees. Using devices in kiosk mode is particularly common for organizations with Firstline Workers. Firstline workers (FLW) include users who do not sit at a workstation using a computer or use corporate email for collaboration. FLW include but are not limited to retail employees, maintenance or field agents, medical personal and so on. Organizations want their employees to be able to pick a device from the pool, perform a single gesture to "make it theirs" for the duration of their shift. At the end of their shift, the organization want the employee to be able to easily sign out globally on the device, so the device can be returned to the device pool.

Applying digital transformation to FLW workflows presents challenges that do not exist for in-house workers. High turnover, diverse demographics, and lack of familiarity of the FLW with core productivity tools can be additional hurdles.
Organizations may adopt different strategies to address these challenges. For example, some organizations employ a Bring Your Own Device strategy in which an employee downloads and uses one or more business mobile applications on his personal device. Some organizations provide their employees with shared devices such as iPads or Android tablets.

Because these devices were originally envisioned to be personal devices not shared devices, development efforts for both operating systems and application software were directed to keeping a user signed in. The procedures in place for signing out of applications are thus clumsy, time-consuming, prone to error and confusing to the user. The disclosed subject matter makes global sign-out fast, effortless and convenient.

### Global Sign-Out on Shared Devices

Heuristics can be used to determine if an alternate behavior is desired on a particular mobile device to enable one-touch sign-out. The alternate behavior can be the appearance of a sign-out experience and mechanism. For example, instead of a "sign out" link appearing, an "end of shift" link can be displayed. It will be appreciated that the use of the words "end of shift" is an example only and not meant to be limiting. Any designation for the alternate behavior can be used. Heuristics can be used to determine if a particular mobile device is a shared device. If the device is a shared device, this information can be made discoverable to mobile applications (e.g. by including a "shared device" flag in authentication tokens). When a mobile application finds the shared device flag indicates the device is shared, the "sign-out" link for the mobile application can be replaced with an "end my shift" link. In response to a user selecting the alternative behavior, global sign out behavior can include deleting session artifacts on the device and/or on the server. Refresh tokens can be revoked to ensure that a user is signed out of third party mobile applications.

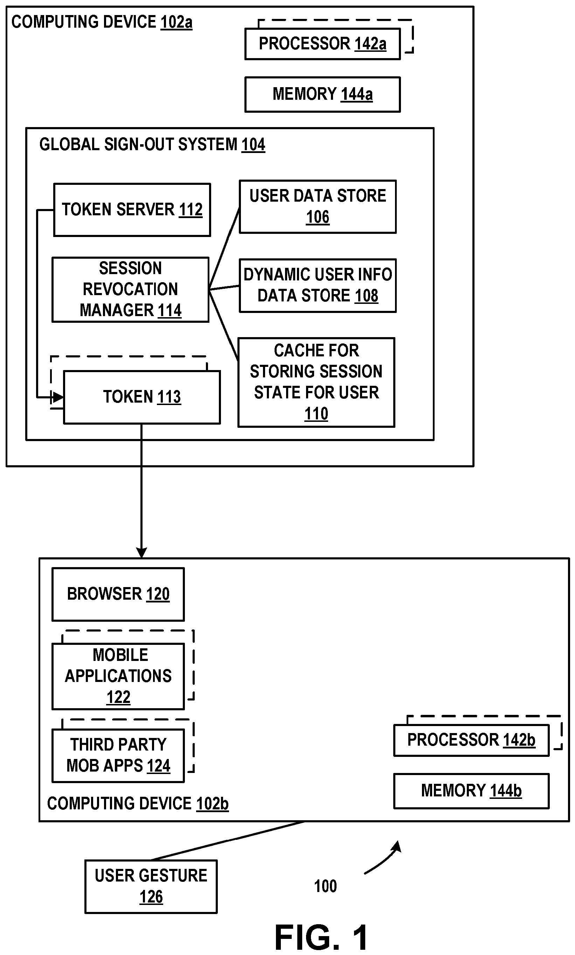

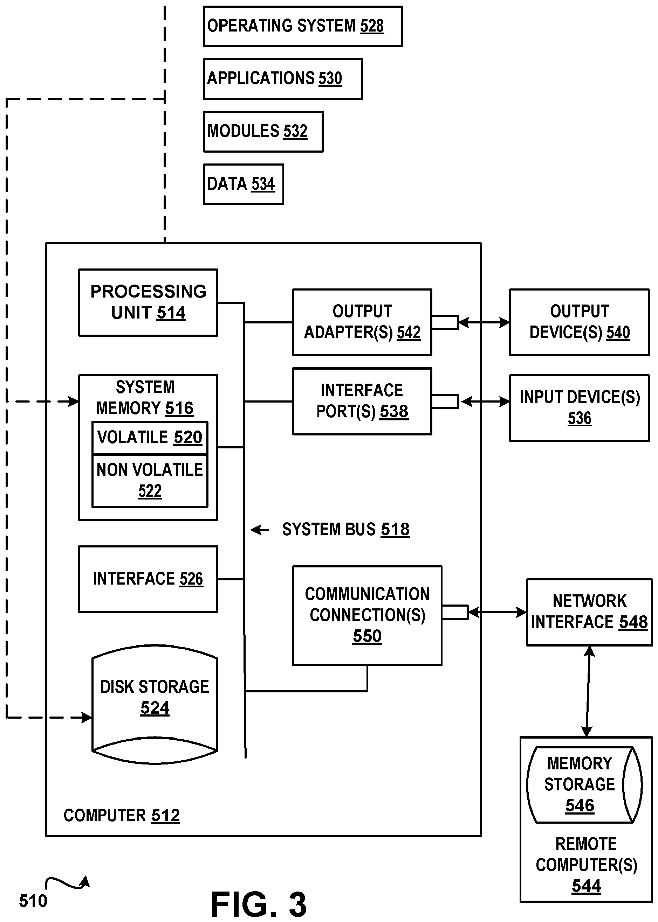

FIG. 1 is a block diagram representing an example of a system 100 for global sign-out in accordance with aspects of the subject matter described herein. All or portions of system 100 may reside on one or more computers or computing devices such as the computers described below with respect to FIG. 3. System 100 or portions thereof may be provided as a stand-alone system or as a plug-in or add-in. System 100 or portions thereof may include information obtained from a service (e.g., in the cloud) or may operate in a cloud computing environment. Cloud computing enables access to shared pools of configurable system resources. It can also provide various services that can be set up rapidly with little effort. Sharing of resources can provide economies of scale.

Cloud computing enables an entity to focus on its actual business instead of having to provide its own computer infrastructure and maintenance. A cloud computing environment can be an environment in which computing services are not owned but are provided on demand. For example, information may reside on multiple devices in a networked cloud and/or data can be stored on multiple devices within the cloud. Cloud providers typically use a "pay-as-you-go" paradigm. In accordance with aspects of the subject matter disclosed herein, operating in a cloud computing environment provides the advantage of large quantities of data for analysis. It will be appreciated that finding network patterns indicating untrustworthy behavior is enhanced by observation of network patterns accessing many different web applications on many different web servers.

System 100 can include one or more computing devices such as, for example, computing device 102a. Contemplated computing devices include but are not limited to desktop computers, tablet computers, laptop computers, notebook computers, personal digital assistants, smart phones, tablets, cellular telephones, mobile telephones, servers, virtual machines, devices including databases, firewalls and so on. A computing device such as computing device 102a can include one or more processors such as processor 142a, etc., and a memory such as memory 144a that communicates with the one or more processors. Computing device 102a can be a server.

System 100 can include one or more computing devices such as, for example, computing device 102b. Contemplated computing devices include but are not limited to desktop computers, tablet computers, laptop computers, notebook computers, personal digital assistants, smart phones, tablets, cellular telephones, mobile telephones, servers, virtual machines, devices including databases, firewalls and so on. A computing device such as computing device 102b can include one or more processors such as processor 142b, etc., and a memory such as memory 144b that communicates with the one or more processors. Computing device 102b can be a client device such as but not limited to a smart phone or tablet.

System 100 may include one or more program modules running on a server computer which when loaded into the memory and accessed by the one or more processors configure the processor or processors to perform the actions attributed to the one or more program modules. System 100 can include a global sign-out system 104 for global sign-out on shared devices. Global sign-out system 104 can include a user data store 106, a data store for dynamic user information, dynamic user information data store 108, a cache for storing session state 110, a token server 112, and a session revocation manager such as session revocation manager 114.

The user data store 106 can store static information for the user. Static information is information that infrequently changes between sessions (e.g., name, occupation, etc.). Static information can be information that indicates that the user is a member of a group, that the user has a particular license, etc. For example, the identity of the user can be checked for inclusion in a group (e.g. user is a member of "retail employees" group). The identity of the user can be checked to determine if the user has a particular license.

The dynamic user information store 108 can store dynamic information for the user. Dynamic user information data store 108 can include data that is computed at run-time. Dynamic information is information that may or is expected to change between sessions. Dynamic information can include information such as if a user is assigned to one of a number of locations, one of a number of tasks, etc. Any appropriate user information can be examined.

System 100 can include a cache for storing session state for a user. The cache may be a portion of memory 144a. The cache for storing session state for a user can store access tokens and refresh tokens. The cache for storing session state 110 can include tokens served by a token server such as token server 112. A token can generate a token or tokens such as token 113, etc. A token can be a security credential. A token can identify a user, and can include or identify what privileges the user has. A token can be used to make security decisions and to store tamper-proof or at least tamper-resistant information. A token can be capable of holding additional free-form data that can be attached while the token is being created. A token can include information that a user is or is not a FLW. A token can include a time period for which the token is valid. A token can be an access token. A token can be a refresh token. Tokens can be provided to another computing device.

System 100 can include a session revocation manager 114. The session revocation manager 114 can remove or add functionality to a mobile application. The session revocation manager 114 can customize a mobile application. For example, the session revocation manager 114 can customize a mobile application running on a client device for a FLW. The session revocation manager 114 can add or remove user interfaces presented to the user. The session revocation manager 114 can customize a sign-out experience.

System 100 can include one or more program modules running on a client computer such as computing device 102b which when loaded into the memory 144b and accessed by the one or more processors 142b, etc. configure the processor or processors to perform the actions attributed to the one or more program modules. System 100 can include one or more browsers such as browser 120, etc. System 100 can include one or more mobile applications such as mobile application 122, etc. System 100 can include one or more third party mobile applications such as third party mobile applications 124, etc. A user can sign in and sign out using a user gesture such as user gesture 126. Typically, a sign-on user gesture can be entering a username or password.

Traditionally, when a user signs in, after some negotiation between the mobile application on the user's device and the application manager running on the server, two tokens are returned to the user's device, an access token and a refresh token. The tokens are associated with a particular session. The access token is used to enable the mobile application running on the client device to access the resource on the server device. The access token is typically valid for a period of time (e.g., an hour). Because circumstances regarding the user can change, (e.g., the user's access can be revoked before the user signs out), the user is typically required to check in from time to time with the application manager on the server device. After the access token time period has expired, the mobile application sends the refresh token to the mobile application manager and if access to be resource is still allowed, the mobile application receives a new access token. The refresh token thus is a way to have the mobile application periodically authenticate to the application manager without the user having to sign in again. Mobile applications are sandboxed so that one application cannot access another application's tokens. Sandboxing is a technique in which applications are isolated from each other so that one application cannot affect another application that is running on the same device at the same time.

In contrast, in accordance with aspects of the subject matter disclosed herein, in response to signing in, the session revocation manager 114 can create a session. The session revocation manager 114 can store session state in cache. When a user signs in, session state is created for the user and tokens are stored in the session state.

Traditionally, a sign off gesture comprises selecting a "sign-out" link or a "remove my account" link. As described above, typically efforts are made to keep the user signed in to all possible mobile applications. In accordance with aspects of the subject matter disclosed herein, as described above, in response to determining that a device is a shared device by the appropriate heuristics, a sign-out link may display an alternative message such as "end my shift" or the like. In response to selecting the end my shift link, global sign-out behavior can ensue. In accordance with aspects of the subject matter disclosed herein, the session revocation manager 114 can delete or invalidate the refresh tokens for mobile applications running on or signed into on the mobile device. The session revocation manager 114 can delete or invalidate the browser sign in cookies. The session revocation manager 114 can delete or invalidate refresh tokens granted to the user. When the user signs out, all the refresh tokens and cookies in the session state can be invalidated. Thus, an effort to access the refresh tokens will fail. In accordance with some aspects of the subject matter disclosed herein, a manager or system administrator can access the shared session state and can force the global sign out.

It will be appreciated that although the session revocation manager has been described in a server-side implementation, a client-side implementation of the session revocation manager is contemplated. In a client-side implementation of global sign-out on shared devices, the session revocation manager and the session state for the user can be stored on the user device. Mobile applications can access the shared session state and can invalidate tokens for the application. Instead of a "sign-out" or "remove my account" link, an "end my shift" link can be displayed on the mobile device. In response to the user clicking on or otherwise selecting the link, the mobile application can access the shared session state and can invalidate or delete the session artifact (e.g., token for its mobile application or cookie for browser).

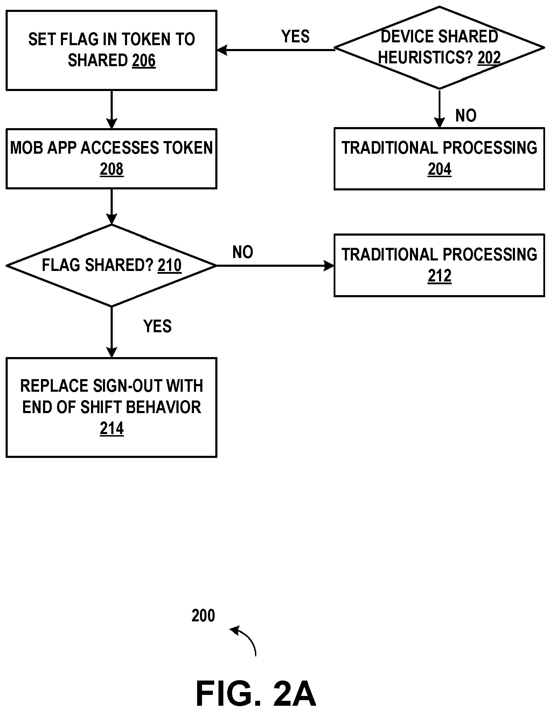

FIG. 2A illustrates an example of a method 200 for global sign-out on shared devices in accordance with aspect of the subject matter disclosed herein. While method 200 describes a series of operations that are performed in a sequence, it is to be understood that method 200 is not limited by the order of the sequence depicted. For instance, some operations may occur in a different order than that described. In addition, one operation may occur concurrently with another operation. In some instances, not all operations described are performed. In some instances, not all operations performed are illustrated. Method 200 or portions thereof may be executed by a system or a portion of a system such as system 100.

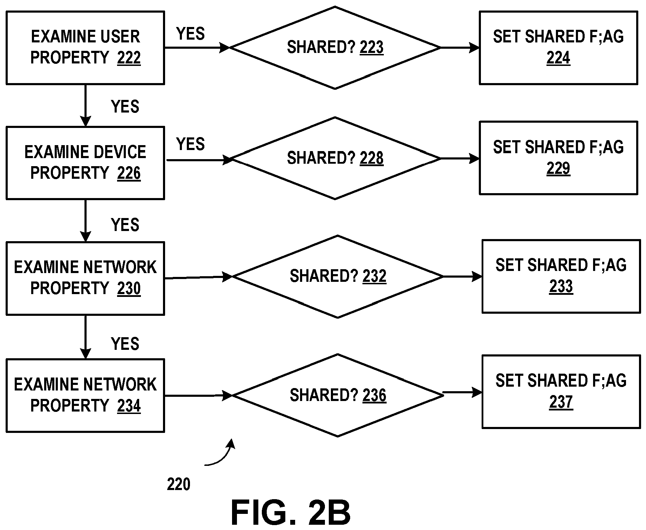

At operation 202 heuristics are applied to determine whether or not the device is a shared device. An example of a suitable heuristic or set of heuristics can be checking for a particular user property, device property, network property and/or location property although any suitable set of conditions or rules can be applied, as described more fully with respect to FIG. 2B. At operation 204 in response to determining that the device is not a shared device, traditional device sign-on processing occurs. At operation 206 in response to determining that the device is a shared device, the shared device information is made discoverable to mobile applications running on the device. One contemplated way to make the shared device information discoverable is to set a flag in the authentication tokens to indicate that the device is shared. At operation 208 the authentication token can be accessed by a mobile application. At operation 210 the flag in the authentication token can be examined. At operation 212 in response to determining that the flag indicates the device is not a shared device, normal device sign-off processing can occur. At operation 214 in response to determining that the flag indicates that the device is a shared device, the sign-out link can be replaced with another link that indicates that a shared device sign-out will occur. In response to a user gesture selecting the shared device sign-out, global sign-out processing can occur. Global sign-out behavior can include deleting session artifacts and/or revoking refresh tokens (e.g., by setting the expiration date/time of the refresh token to a current date/time) to ensure that a user is signed out of third party mobile applications.

FIG. 2B illustrates an example of a method 220 comprising a more detailed description of a portion of FIG. 2A in accordance with aspects of the subject matter disclosed herein. While method 220 describes a series of operations that are performed in a sequence, it is to be understood that method 220 is not limited by the order of the sequence depicted. For instance, some operations may occur in a different order than that described. In addition, one operation may occur concurrently with another operation. In some instances, not all operations described are performed. In some instances, not all operations performed are illustrated. Method 220 or portions thereof may be executed by a system or a portion of a system such as system 100.

Method 220 is a more detailed description of a portion of method 200, namely determining whether or not a device is a shared device. The determination can be based on the identity of the user who is signing in. At operation 222 a user property or a number of user properties can be examined. The user property or properties considered can be dynamic or static or a combination thereof. A static property is a property that infrequently changes between sessions. A dynamic property is a property that is expected to change between sessions. The user property can be a static property such as: a user property that indicates that the user is a member of a group, that the user has a particular license, etc. For example, the identity of the user can be checked for inclusion in a group (e.g. user is a member of "retail employees" group). The identity of the user can be checked to determine if the user has a particular license. The user property can be a dynamic property such as a user is assigned to one of a number of locations, one of a number of tasks, etc. Any appropriate user property can be examined. At operation 223 in response to determining that the user property indicates that the user is using a shared device, the token flag can be set to shared at operation 224. This approach assumes that the device is a device that is always used as a shared device.

Alternatively, at operation 226 a property of the device can be examined. The property of the device can be based on a device identification, device type, a mobile device management system (MDM) designation, etc. An MDM is a type of security software typically used by an IT department to monitor, manage and secure employees' mobile devices that can be deployed across multiple mobile service providers and across multiple mobile operating systems being used in the organization. This approach can be used when an employee uses his own device as a shared device for at least a portion of the use of the device. At operation 228 in response to determining that the device property indicates that the device is a shared device, the token flag can be set to shared at operation 229. At operation 230 other signals such as device address or network can be used to determine if the device is a shared device. For example, all devices connected to an organization's Wi-Fi network can be considered to be shared devices. At operation 232 in response to determining the type of connection is a particular type of connection, the flag can be set to shared at 233. At operation 234 a location can be used to determine if a device is a shared device. In accordance with some aspects of the subject matter disclosed herein, heuristics can be organizationally-specific. For example, an organization can be given an option to create its own conditional policies. For example, an organization can decide to determine a policy for determining when a device is a shared device to be: if the device is used by a user who belongs to a particular group "medical personnel" and has a task of "nurse" that device is identified as a shared device. Any number of combinations are contemplated.
This approach can accommodate a device that sometimes is a shared device and sometimes is a personal device.

Alternatively (not shown) a user can be automatically signed out a configurable amount of time after the end of the user's shift. A manager, administrator or an IT person can sign out a user. Upon selecting the end of shift link, a global sign out process can delete session artifacts from the shared session state. Refresh tokens can be revoked. The session revocation manager can be called to revoke refresh tokens to ensure that the user is signed out of mobile and third party mobile applications. Session cookies in a user's browser can also be deleted or revoked. In accordance with some aspects of the subject matter disclosed herein, the session revocation manager can reset the date time user property of the refresh token to the current date-time. Typically although not always, this operation is performed (by the user or an administrator) if the user has a lost or stolen device. This operation can prevent access to any of the organization's data accessed through applications on the device without the user first being required to sign in again. This operation can force the user to sign in again for all applications that they have previously consented to, independent of device. Session artifacts can be deleted for a subset of mobile applications that are used by all employees (for example, an app that is used for shift management) so that only the subset of mobile applications display an "End my shift" link which triggers the global sign-out, while other mobile applications continue to show a traditional "remove" or "hide" account link.

Described herein is a computing device for enabling global sign-out comprising:
a memory connected to at least one processor, the at least one processor configured to change the behavior of a mobile application on a shared device by determining by heuristics that a device is a shared device; and in response to a sign-out gesture performing a global sign out. The heuristics are based on an identity of a user, characteristics of the device, a network connection type, a location of the device or any combination thereof. Traditional sign out behavior can be replaced by global sign out behavior. Global sign out behavior can comprise deleting shared session state artifacts. Global sign out behavior can comprise resetting a refresh token date/time to current date/time.

Described herein is a method of global sign out on a shared computing device comprising receiving by a processor of a computing device of a mobile device, a token comprising a flag indicating that the mobile device is a shared mobile device; and in response performing the global sign out behavior. Global sign out behavior can include deleting shared session tokens. Global sign out behavior can comprise resetting a date/time field of a refresh token to current date/time. Described herein is a computing device for performing global sign-out on a shared device comprising a memory attached to a processor, the processor comprising a session revocation manager that in response to determining that the computing device is a shared mobile device, initiates a session, the session sharing state for a plurality of mobile applications running on the shared mobile device; and in response to receiving a user gesture selecting a global sign out, signs out all the mobile applications running on the shared mobile device. The computing device is determined to be a shared mobile device based on at least one of: user, device, network and location. The global sign out behavior comprises deleting access tokens from the shared state. The global sign out behavior is initiated by the user. The global sign out behavior comprises resetting a date/time aspect of refresh tokens to current date/time. The global sign out behavior is initiated by an administrator. The shared device is a tablet. Session artifacts are maintained on a server machine. Session artifacts are maintained on the shared device.

### Example of a Suitable Computing Environment

In order to provide context for various aspects of the subject matter disclosed herein, FIG. 3 and the following discussion are intended to provide a brief general description of a suitable computing environment 510 in which various embodiments of the subject matter disclosed herein may be implemented. While the subject matter disclosed herein is described in the general context of computer-executable instructions, such as program modules, executed by one or more computers or other computing devices, those skilled in the art will recognize that portions of the subject matter disclosed herein can also be implemented in combination with other program modules and/or a combination of hardware and software. Generally, program modules include routines, programs, objects, physical artifacts, data structures, etc. that perform particular tasks or implement particular data types. Typically, the functionality of the program modules may be combined or distributed as desired in various embodiments. The computing environment 510 is only one example of a suitable operating environment and is not intended to limit the scope of use or functionality of the subject matter disclosed herein.

With reference to FIG. 3, a computing device in the form of a computer 512 is described. Computer 512 may include at least one processing unit 514, a system memory 516, and a system bus 518. The at least one processing unit 514 can execute instructions that are stored in a memory such as but not limited to system memory 516. The processing unit 514 can be any of various available processors. For example, the processing unit 514 can be a graphics processing unit (GPU). The instructions can be instructions for implementing functionality carried out by one or more components or modules discussed above or instructions for implementing one or more of the methods described above.

Dual microprocessors and other multiprocessor architectures also can be employed as the processing unit 514. The computer 512 may be used in a system that supports rendering graphics on a display screen. In another example, at least a portion of the computing device can be used in a system that comprises a graphical processing unit. The system memory 516 may include volatile memory 520 and nonvolatile memory 522. Nonvolatile memory 522 can include read only memory (ROM), programmable ROM (PROM), electrically programmable ROM (EPROM) or flash memory. Volatile memory 520 may include random access memory (RAM) which may act as external cache memory. The system bus 518 couples system physical artifacts including the system memory 516 to the processing unit 514. The system bus 518 can be any of several types including a memory bus, memory controller, peripheral bus, external bus, or local bus and may use any variety of available bus architectures. Computer 512 may include a data store accessible by the processing unit 514 by way of the system bus 518. The data store may include executable instructions, 3D models, materials, textures and so on for graphics rendering.

Computer 512 typically includes a variety of computer readable media such as volatile and nonvolatile media, removable and non-removable media. Computer readable media may be implemented in any method or technology for storage of information such as computer readable instructions, data structures, program modules or other data. Computer readable media include computer-readable storage media (also referred to as computer storage media) and communications media. Computer storage media includes physical (tangible) media, such as but not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices that can store the desired data and which can be accessed by computer 512. Communications media include media such as, but not limited to, communications signals, modulated carrier waves or any other intangible media which can be used to communicate the desired information and which can be accessed by computer 512.

It will be appreciated that FIG. 3 describes software that can act as an intermediary between users and computer resources. This software may include an operating system 528 which can be stored on disk storage 524, and which can allocate resources of the computer 512. Disk storage 524 may be a hard disk drive connected to the system bus 518 through a non-removable memory interface such as interface 526. System applications 530 take advantage of the management of resources by operating system 528 through program modules 532 and program data 534 stored either in system memory 516 or on disk storage 524. It will be appreciated that computers can be implemented with various operating systems or combinations of operating systems.

A user can enter commands or information into the computer 512 through an input device(s) 536. Input devices 536 include but are not limited to a pointing device such as a mouse, trackball, stylus, touch pad, keyboard, microphone, voice recognition and gesture recognition systems and the like. These and other input devices connect to the processing unit 514 through the system bus 518 via interface port(s) 538. An interface port(s) 538 may represent a serial port, parallel port, universal serial bus (USB) and the like. Output devices(s) 540 may use the same type of ports as do the input devices. Output adapter 542 is provided to illustrate that there are some output devices 540 like monitors, speakers and printers that require particular adapters. Output adapters 542 include but are not limited to video and sound cards that provide a connection between the output device 540 and the system bus 518. Other devices and/or systems or devices such as remote computer(s) 544 may provide both input and output capabilities.

Computer 512 can operate in a networked environment using logical connections to one or more remote computers, such as a remote computer(s) 544. The remote computer 544 can be a personal computer, a server, a router, a network PC, a peer device or other common network node, and typically includes many or all of the elements described above relative to the computer 512, although only a memory storage device 546 has been illustrated in FIG. 3. Remote computer(s) 544 can be logically connected via communication connection(s) 550. Network interface 548 encompasses communication networks such as local area networks (LANs) and wide area networks (WANs) but may also include other networks. Communication connection(s) 550 refers to the hardware/software employed to connect the network interface 548 to the bus 518. Communication connection(s) 550 may be internal to or external to computer 512 and include internal and external technologies such as modems (telephone, cable, DSL and wireless) and ISDN adapters, Ethernet cards and so on.

It will be appreciated that the network connections shown are examples only and other means of establishing a communications link between the computers may be used. One of ordinary skill in the art can appreciate that a computer 512 or other client device can be deployed as part of a computer network. In this regard, the subject matter disclosed herein may pertain to any computer system having any number of memory or storage units, and any number of applications and processes occurring across any number of storage units or volumes. Aspects of the subject matter disclosed herein may apply to an environment with server computers and client computers deployed in a network environment, having remote or local storage. Aspects of the subject matter disclosed herein may also apply to a standalone computing device, having programming language functionality, interpretation and execution capabilities.

The various techniques described herein may be implemented in connection with hardware or software or, where appropriate, with a combination of both. Thus, the methods and apparatus described herein, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing aspects of the subject matter disclosed herein. As used herein, the term "machine-readable medium" shall be taken to exclude any mechanism that provides (i.e., stores and/or transmits) any form of propagated signals. In the case of program code execution on programmable computers, the computing device will generally include a processor, a storage medium readable by the processor (including volatile and non-volatile memory and/or storage elements), at least one input device, and at least one output device. One or more programs that may utilize the creation and/or implementation of domain-specific programming models aspects, e.g., through the use of a data processing API or the like, may be implemented in a high level procedural or object oriented programming language to communicate with a computer system. However, the program(s) can be implemented in assembly or machine language, if desired. In any case, the language may be a compiled or interpreted language, and combined with hardware implementations.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing device shared among a plurality of users (102a, 102b) for enabling global sign-out comprising a plurality of mobile applications, including a first application; a memory (144a, 144b) connected to at least one processor(142a, 142b), the device being **characterized in that** the at least one processor (142a, 142b) is configured to change the behavior of the first application (122) on the shared device (102b) by:
determining by heuristics that an alternate behavior of a sign-out mechanism of the first application is desired;
in response to positive determining, replacing a sign-out link of the first application with a global sign-out link; and
in response to a selection of the global sign-out link, signing out a user from all mobile applications into which the user is signed in.

2. The computing device of claim 1, wherein the heuristics are based on an identity of a user.

3. The computing device of claim 1, wherein the heuristics are based on characteristics of the device.

4. The computing device of claim 1, wherein the heuristics are based on a network connection type.

5. The computing device of claim 1, wherein the heuristics are based on a location of the device.

6. The computing device of claim 1, further comprising:
replacing sign out behavior with global sign out behavior comprising deleting shared session state artifacts.

7. The computing device of claim 1, wherein global sign out behavior comprises resetting a refresh token date/time to current date/time.

8. A method (200) of global sign out on a shared computing device (102b) having a plurality of mobile applications, including a first application and shared among a plurality of users, the method **characterized by**:
receiving by a processor (142b) of the computing device, a token comprising a flag indicating that an alternate behavior of a sign-out mechanism of the first application is desired;
in response to said receiving of the token, replacing a sign-out link of the first application with a global sign-out link; and
in response to a selection of the global sign-out link, signing out a user from all mobile applications into which the user is signed in.

9. The method of claim 8, further comprising:
deleting shared session tokens.

10. The method of claim 8, wherein the global sign out behavior comprises resetting a date/time field of a refresh token to current date/time.

11. The computing device of claim 1, wherein the global sign out comprises deleting access tokens from the shared state.

12. The computing device of claim 1, wherein the global sign out is initiated by the user.

## Patentansprüche

1. Computergerät, das von einer Vielzahl von Anwendern (102a, 102b) gemeinsam genutzt wird, um eine globale Abmeldung zu ermöglichen, umfassend:
eine Vielzahl von mobilen Anwendungen, einschließlich einer ersten Anwendung; einen Speicher (144a, 144b), der mit mindestens einem Prozessor (142a, 142b) verbunden ist, wobei das Gerät **dadurch gekennzeichnet ist, dass** der mindestens eine Prozessor (142a, 142b) dazu konfiguriert ist, das Verhalten der ersten Anwendung (122) des gemeinsam genutzten Geräts (102b) zu ändern, indem er:
durch Heuristik bestimmt, dass ein alternatives Verhalten eines Abmeldemechanismus der ersten Anwendung gewünscht ist;
als Reaktion auf eine positive Feststellung, einen Abmeldelink der ersten Anwendung durch einen globalen Abmeldelink ersetzt; und
als Reaktion auf die Auswahl des globalen Abmeldelinks, einen Anwender von allen mobilen Anwendungen abmeldet, bei denen der Anwender angemeldet ist.

2. Computergerät nach Anspruch 1, wobei die Heuristik auf der Identität eines Anwenders basiert.

3. Computergerät nach Anspruch 1, wobei die Heuristik auf Eigenschaften des Geräts basiert.

4. Computergerät nach Anspruch 1, wobei die Heuristik auf einem Netzwerkverbindungstyp basiert.

5. Computergerät nach Anspruch 1, wobei die Heuristik auf einem Standort des Geräts basiert.

6. Computergerät nach Anspruch 1, ferner umfassend:
das Ersetzen des Abmeldeverhaltens durch ein globales Abmeldeverhalten, welches das Löschen von Artefakten des gemeinsamen Sitzungsstatus umfasst.

7. Computergerät nach Anspruch 1, wobei das globale Abmeldeverhalten das Zurücksetzen eines Datums/einer Uhrzeit eines Aktualisierungstokens auf das aktuelle Datum/die aktuelle Uhrzeit umfasst.

8. Verfahren (200) zur globalen Abmeldung auf einem gemeinsam genutzten Computergerät (102b) mit einer Vielzahl von mobilen Anwendungen, einschließlich einer ersten Anwendung, wobei das Gerät von einer Vielzahl von Anwendern gemeinsam genutzt wird, wobei das Verfahren **gekennzeichnet ist durch**:
das Empfangen eines Tokens mit einem Flag, das anzeigt, dass ein alternatives Verhalten eines Abmeldemechanismus der ersten Anwendung gewünscht ist, **durch** einen Prozessor (142b) des Computergeräts;
das Ersetzen eines Abmeldelinks der ersten Anwendung **durch** einen globalen Abmeldelink als Reaktion auf den Empfang des Tokens; und
das Abmelden eines Anwender von allen mobilen Anwendungen, bei denen der Anwender angemeldet ist, als Reaktion auf die Auswahl des globalen Abmeldelinks.

9. Verfahren nach Anspruch 8, ferner umfassend:
das Löschen von gemeinsamen Sitzungstokens.

10. Verfahren nach Anspruch 8, wobei das globale Abmeldeverhalten das Zurücksetzen eines Datums-/Uhrzeitfeldes eines Aktualisierungstokens auf das aktuelle Datum/die aktuelle Uhrzeit umfasst.

11. Computergerät nach Anspruch 1, wobei die globale Abmeldung das Löschen von Zugriffstokens aus dem gemeinsamen Status umfasst.

12. Computergerät nach Anspruch 1, wobei die globale Abmeldung durch den Anwender eingeleitet wird.

## Revendications

1. Dispositif informatique partagé entre une pluralité d'utilisateurs (102a, 102b) destiné à activer une fermeture de session globale, comprenant :
une pluralité d'applications mobiles, comprenant une première application ; une mémoire (144a, 144b) connectée à au moins un processeur (142a, 142b), le dispositif étant **caractérisé en ce que** le au moins un processeur (142a, 142b) est configuré pour modifier le comportement de la première application (122) sur le dispositif partagé (102b) des façons suivantes :
en déterminant, par l'heuristique, qu'un comportement alternatif d'un mécanisme de fermeture de session de la première application est souhaité ;
en réponse à une détermination positive, en remplaçant un lien de fermeture de session de la première application par un lien de fermeture de session globale ; et
en réponse à une sélection du lien de fermeture de session globale, en fermant la session d'un utilisateur sur toutes les applications mobiles auxquelles l'utilisateur est connecté.

2. Dispositif informatique selon la revendication 1, dans lequel l'heuristique est basée sur l'identité d'un utilisateur.

3. Dispositif informatique selon la revendication 1, dans lequel l'heuristique est basée sur les caractéristiques du dispositif.

4. Dispositif informatique selon la revendication 1, dans lequel l'heuristique est basée sur un type de connexion réseau.

5. Dispositif informatique selon la revendication 1, dans lequel l'heuristique est basée sur un emplacement du dispositif.

6. Dispositif informatique selon la revendication 1, comprenant en outre :
le remplacement du comportement de fermeture de session par un comportement de fermeture de session globale comprenant la suppression d'artefacts d'état de session partagée.

7. Dispositif informatique selon la revendication 1, dans lequel le comportement de fermeture de session globale comprend la réinitialisation d'un horodatage de jeton de rafraîchissement sur la date et l'heure actuelles.

8. Procédé (200) de fermeture de session globale sur un dispositif informatique partagé (102b) ayant une pluralité d'applications mobiles, comprenant une première application et partagé entre une pluralité d'utilisateurs, le procédé étant **caractérisé par** :
la réception, par un processeur (142b) du dispositif informatique, d'un jeton comprenant un drapeau indiquant qu'un comportement alternatif d'un mécanisme de fermeture de session de la première application est souhaité ;
en réponse à ladite réception du jeton, le remplacement d'un lien de fermeture de session de la première application par un lien de fermeture de session globale ; et
en réponse à une sélection du lien de fermeture de session globale, la fermeture de la session d'un utilisateur sur toutes les applications mobiles auxquelles l'utilisateur est connecté.

9. Procédé selon la revendication 8, comprenant en outre :
la suppression de jetons de session partagée.

10. Procédé selon la revendication 8, dans lequel le comportement de fermeture de session globale comprend la réinitialisation d'un champ d'horodatage d'un jeton de rafraîchissement sur la date et l'heure actuelles.

11. Dispositif informatique selon la revendication 1, dans lequel la fermeture de session globale comprend la suppression de jetons d'accès depuis l'état partagé.

12. Dispositif informatique selon la revendication 1, dans lequel la fermeture de session globale est initiée par l'utilisateur.
